# EUROPÄISCHE PATENTSCHRIFT

(11) **EP 4 306 251 B1**
(45) Veröffentlichungstag und Bekanntmachung des Hinweises auf die Patenterteilung: **27.08.2025**
(21) Anmeldenummer: 23183794.9
(22) Anmeldetag: 06.07.2023
(51) Int. Cl.: B23F 19/10, B23F 21/12, B23F 21/00

(54) **WERKZEUG UND VERFAHREN ZUM SPANENDEN ENTGRATEN UND/ODER ANFASEN EINER EINE MEHRZAHL VON WERKSTÜCKZÄHNEN UMFASSENDEN WERKSTÜCKVERZAHNUNG**
TOOL AND METHOD FOR CUTTING AND DEBURRING AND/OR CHAMFERING A WORKPIECE TOOTHING COMPRISING A PLURALITY OF WORKPIECE TEETH
OUTIL ET PROCÉDÉ D'ÉBAVURAGE ET/OU DE CHANFREINAGE PAR ENLÈVEMENT DE COPEAUX D'UNE DENTURE DE PIÈCE USINÉE COMPRENANT UNE PLURALITÉ DE DENTS DE PIÈCE USINÉE

(30) Priorität: 11.07.2022 DE 102022117192
(43) Veröffentlichungstag der Anmeldung: 17.01.2024
(73) Patentinhaber: Präwema Antriebstechnik GmbH, 37269 Eschwege/Werra (DE)
(72) Erfinder: SCHIEKE, Jörg, 99092 Erfurt-Marbach (DE); PAINCZYK, Ralf, 36214 Nentershausen (DE); HOLDERBEIN, Walter, 37269 Eschwege (DE); REINHARDT, Jörg, 99826 Berka v.d.H. (DE)
(74) Vertreter: Cohausz & Florack

(56) Entgegenhaltungen:
- DE-A1- 102011 118 312
- DE-A1- 102014 008 475
- DE-A1- 102014 018 328
- DE-A1- 102018 001 477
- DE-A1- 102020 001 428
- DE-C1- 3 608 458
- JP-A- S5 531 571

## Beschreibung

Die Erfindung betrifft ein Werkzeug zum spanenden Entgraten und/oder Anfasen einer eine Mehrzahl von Werkstückzähnen umfassenden Werkstückverzahnung mit einer Mehrzahl von um eine Werkzeugdrehachse des Werkzeugs verteilt angeordneten und jeweils eine Erstreckung entlang der Werkzeugdrehachse aufweisenden Schneidkanten zum spanenden Entgraten und/oder Anfasen von sich jeweils zwischen einer Zahnflanke und einer Stirnseite eines Werkstückzahns erstreckenden Werkstückkanten, insbesondere Stirnkanten, der Werkstückverzahnung, wobei die Schneidkanten durch Werkzeugzähne wenigstens einer Werkzeugverzahnung des Werkzeugs gebildet sind. Zudem betrifft die Erfindung ein Verfahren zum spanenden Entgraten und/oder Anfasen einer eine Mehrzahl von Werkstückzähnen umfassenden Werkstückverzahnung eines Werkstücks mit wenigstens einem solchen Werkzeug.

Werkstückverzahnungen von Werkstücken, etwa in Form von Zahnrädern oder Zahnstangen, werden häufig mittels spanenden Bearbeitungsverfahren, wie beispielsweise Wälzfräsen oder Wälzschälen, hergestellt. Dabei entstehen im Bereich der Stirnseiten der Werkstückzähne der Werkstückverzahnung typischerweise Grate und scharfe Werkstückkanten, die in der Regel unerwünscht und mithin zu entfernen sind. Zu diesem Zweck kommen in der Praxis beispielsweise Werkzeuge zum umformenden Entgraten und Anfasen von Werkstückverzahnungen, etwa in Form von Drückrädern, zum Einsatz. Mit solchen Werkzeugen können an den Werkstückkanten durch Umformen Fasen erzeugt und dabei die an den Werkstückkanten gebildeten Grate entfernt werden.

Zudem sind Werkzeuge zum spanenden Entgraten und/oder Anfasen von Werkstückverzahnungen bekannt. Solche Werkzeuge weisen typischerweise eine Mehrzahl von Schneidkanten auf, mit denen die sich jeweils zwischen einer Zahnflanke und einer Stirnseite eines Werkstückzahns erstreckenden Werkstückkanten der Werkstückverzahnung spanend entgratet und/oder angefast werden können. Dabei sind die Schneidkanten typischerweise um eine Werkzeugdrehachse verteilt angeordnet, um die das Werkzeug während der spanenden Bearbeitung rotiert. Zudem weisen die Schneidkanten häufig eine Erstreckung entlang der Werkzeugdrehachse auf. Entsprechende Schneidkanten sind typischerweise durch separate Schneidplatten gebildet, die an einem Trägerelement des Werkzeugs montiert sind.

Aus dem Stand der Technik ist die DE 10 2014 008 475 A1 bekannt, welche ein Verfahren zum Bearbeiten eines Werkstücks, eine Werkzeuganordnung und eine Verzahnungsmaschine offenbart.

Werkzeuge zum spanenden Entgraten und/oder Anfasen von Werkstückverzahnungen müssen in der Praxis unterschiedlichen, teils widerstreitenden Anforderungen gerecht werden. So besteht einerseits der Bedarf den Aufwand und die Kosten zur Herstellung der Werkzeuge zu verringern. Andererseits sollen die Werkzeuge möglichst verschleißresistent sein, um eine lange Standzeit zu ermöglichen. Mit den bekannten Werkzeugen wird dieser Zielkonflikt zwischen geringen Herstellungskosten und langer Werkzeugstandzeit noch nicht in zufriedenstellender Weise gelöst.

Daher liegt der vorliegenden Erfindung die Aufgabe zugrunde, das Werkzeug und das Verfahren jeweils der eingangs genannten und zuvor näher erläuterten Art derart auszugestalten und weiterzubilden, dass der Kompromiss zwischen geringen Herstellungskosten und langer Werkzeugstandzeit verbessert werden kann.

Diese Aufgabe ist mittels eines Werkzeugs gemäß Anspruch 1 gelöst.

Die genannte Aufgabe ist ferner gemäß Anspruch 11 gelöst durch ein Verfahren zum spanenden Entgraten und/oder Anfasen einer eine Mehrzahl von Werkstückzähnen umfassenden Werkstückverzahnung eines Werkstücks mit wenigstens einem Werkzeug nach einem der Ansprüche 1 bis 10,
- bei dem das Werkzeug unter Eingriff der Werkzeugverzahnung in die Werkstückverzahnung um die Werkzeugdrehachse gedreht wird und
- bei dem mit den Schneidkanten der in die Werkstückverzahnung eingreifenden Werkzeugverzahnung die sich jeweils zwischen einer Zahnflanke und einer Stirnseite eines Werkstückzahns erstreckenden Werkstückkanten, insbesondere Stirnkanten, der Werkstückverzahnung wenigstens abschnittsweise spanend entgratet und/oder angefast werden.

Das Werkzeug weist also wenigstens eine Werkzeugverzahnung auf, deren Werkzeugzähne die Schneidkanten bilden. Auf diese Weise kann das Werkzeug konstruktiv einfach und kostengünstig mit einer verhältnismäßig großen Anzahl an Schneidkanten versehen werden. Durch eine hohe Anzahl an Schneidkanten werden die einzelnen Schneidkanten bei der spanenden Bearbeitung weniger intensiv beansprucht und verschleißen mithin weniger schnell, sodass die Werkzeugstandzeit verlängert wird. So können letztlich die Herstellungskosten bei wenigstens gleichbleibender Werkzeugstandzeit verringert und/oder die Werkzeugstandzeit bei höchstens gleichbleibenden Herstellungskosten verlängert werden.

Dabei kann es sich hinsichtlich einer einfachen und kostengünstigen Herstellung des Werkzeugs anbieten, wenn die Werkzeugzähne der Werkzeugverzahnung jeweils wenigstens eine der Schneidkanten bilden. Alternativ oder zusätzlich kann die Werkzeugverzahnung um die Werkzeugdrehachse umlaufend ausgebildet sein. Dies kann sich hinsichtlich einer effizienten Bearbeitung des Werkstücks anbieten.

Das Werkzeug ist zum spanenden Entgraten und/oder spanenden Anfasen einer Werkstückverzahnung ausgebildet, die eine Mehrzahl von Werkstückzähnen umfasst. Dabei kann unter Entgraten ganz grundsätzlich das Abtrennen wenigstens eines Grats verstanden werden. Alternativ oder zusätzlich kann mit Anfasen ganz grundsätzlich das Erzeugen wenigstens einer Fase gemeint sein.

Das Werkzeug weist die Mehrzahl von Schneidkanten auf. Dabei sind die Schneidkanten derart ausgebildet, dass mit den Schneidkanten Werkstückkanten, insbesondere Stirnkanten, der Werkstückverzahnung spanend entgratet und/oder spanend angefast werden können, die sich jeweils zwischen einer Zahnflanke eines der Werkstückzähne und einer Stirnseite des entsprechenden Werkstückzahns erstrecken. Dabei können die Schneidkanten einfach und zweckmäßig jeweils wenigstens im Wesentlichen geradlinig ausgebildet sein.

Ferner sind die Schneidkanten wenigstens im Wesentlichen auf einer Zylindermantelfläche und/oder Kegelmantelfläche um die Werkzeugdrehachse angeordnet und ist die Werkzeugverzahnung als Stirnverzahnung ausgebildet.

Die Schneidkanten sind um die Werkzeugdrehachse, um die das Werkzeug beim Entgraten und/oder Anfasen der Werkstückverzahnung gedreht werden kann, verteilt angeordnet. Dabei können die Schneidkanten einfach und zweckmäßig wenigstens im Wesentlichen gleichmäßig um die Werkzeugdrehachse verteilt angeordnet sein. Dann können die Abstände zwischen den Schneidkanten wenigstens im Wesentlichen gleich sein. Zwingend erforderlich ist eine gleichmäßige Verteilung jedoch nicht.

Zudem weisen die Schneidkanten jeweils eine, insbesondere nicht unerhebliche, Erstreckung entlang der Werkzeugdrehachse auf. Die Schneidkanten erstrecken sich also insbesondere nicht im Wesentlichen in einer Ebene senkrecht zu der Werkzeugdrehachse. Die Erstreckung der Schneidkanten entlang der Werkzeugdrehachse ermöglicht auf kinematisch einfache Weise eine effiziente und präzise spanende Bearbeitung der Werkstückkanten.

Um die Werkstückverzahnung mit dem Werkzeug spanend zu entgraten und/oder spanend anzufasen, wird das Werkzeug um die Werkzeugdrehachse gedreht, wobei die Werkzeugverzahnung in die Werkstückverzahnung eingreift. Beim Drehen des Werkzeugs um die Werkzeugdrehachse können also die Werkzeugzähne nacheinander in Zahnlücken zwischen den Werkstückzähnen eingreifen. Unabhängig davon werden mit den Schneidkanten der in die Werkstückverzahnung eingreifenden Werkzeugverzahnung die Werkstückkanten der Werkstückverzahnung, die sich jeweils zwischen einer Zahnflanke und einer Stirnseite eines der Werkstückzähne erstrecken, wenigstens abschnittsweise, insbesondere wenigstens im Wesentlichen, spanend entgratet und/oder spanend angefast.

Das Verfahren kann einfach und zweckmäßig mittels einer Werkzeugmaschine durchgeführt werden. Dann kann das Werkzeug von einem Werkzeugdrehantrieb der Werkzeugmaschine um die Werkzeugdrehachse drehend angetrieben werden. Alternativ oder zusätzlich kann das Werkstück von einem Werkstückantrieb, beispielsweise Werkstückdrehantrieb, der Werkzeugmaschine angetrieben werden. Dabei können der Werkzeugdrehantrieb und der Werkstückantrieb, insbesondere elektronisch, miteinander gekoppelt sein. Dann können das Werkzeug und das Werkstück in Achskopplung angetrieben werden, sodass vorzugsweise eine Drehung des Werkzeugs um die Werkzeugdrehachse eine Bewegung des Werkstücks, beispielsweise eine Drehung des Werkstücks um eine Werkstückdrehachse, bedingt oder umgekehrt. So können das Werkzeug und das Werkstück beispielsweise in einfacher Weise in einem wenigstens im Wesentlichen konstanten Drehzahlverhältnis zueinander drehend angetrieben werden.

Ganz grundsätzlich kann es bevorzugt sein, wenn die Werkstückkanten jeweils durch eine Zahnflanke und eine Stirnseite eines Werkstückzahns gebildet sind. Dann können die Werkstückkanten also jeweils sowohl die Zahnflanke als auch die Stirnseite begrenzen. Entsprechende Werkstückkanten sind in der Praxis häufig zu entgraten und/oder anzufasen, sodass die Vorteile der Erfindung besonders zum Tragen kommen. Aus demselben Grund können die Werkstückkanten alternativ oder zusätzlich als Stirnkanten ausgebildet sein.

Der besseren Verständlichkeit halber und zur Vermeidung von unnötigen Wiederholungen werden nachfolgend das Werkzeug und das Verfahren gemeinsam beschrieben, ohne jeweils im Einzelnen zwischen dem Werkzeug und dem Verfahren zu unterscheiden. Für den Fachmann ist jedoch anhand des Kontextes ersichtlich, welches Merkmal jeweils hinsichtlich des Werkzeugs und/oder des Verfahrens besonders bevorzugt ist.

Gemäß einer ersten bevorzugten Ausgestaltung des Werkzeugs weist die Werkzeugverzahnung wenigstens fünf Werkzeugzähne auf, die jeweils wenigstens eine der Schneidkanten bilden können. So wird auf einfache und kostengünstige Weise eine besonders lange Standzeit des Werkzeugs ermöglicht. Dies gilt umso mehr, wenn die Werkzeugverzahnung wenigstens zehn, vorzugsweise wenigstens fünfzehn, Werkzeugzähne aufweist, die jeweils wenigstens eine der Schneidkanten bilden. Besonders bevorzugt ist es vor diesem Hintergrund, wenn die Werkzeugverzahnung wenigstens zwanzig jeweils wenigstens eine der Schneidkanten bildende Werkzeugzähne aufweist.

Unabhängig von der Anzahl der Werkzeugzähne können die Schneidkanten jeweils eine, insbesondere nicht unwesentliche, Erstreckung in Umfangsrichtung der Werkzeugdrehachse aufweisen. Dies wirkt sich positiv auf eine kinematisch einfach zu realisierende Bearbeitung der Werkstückkanten aus. Dabei kann es sich zusätzlich anbieten, wenn die Schneidkanten jeweils in einem Schneidkantenwinkel von wenigstens 20°, vorzugsweise wenigstens 30°, insbesondere wenigstens 40°, und/oder höchstens 70°, vorzugsweise höchstens 60°, insbesondere höchstens 50°, zu der Werkzeugdrehachse angeordnet sind. Ein Schneidkantenwinkel von wenigstens im Wesentlichen 45° kann besonders bevorzugt sein.

Alternativ oder zusätzlich zu einer Erstreckung in Umfangsrichtung sind die Schneidkanten erfindungsgemäß einfach und zweckmäßig wenigstens im Wesentlichen auf einer sich um die Werkzeugdrehachse herum erstreckenden Zylindermantelfläche und/oder Kegelmantelfläche angeordnet. Dann können sich die Schneidkanten zudem jeweils wenigstens im Wesentlichen in der Zylindermantelfläche und/oder der Kegelmantelfläche erstrecken. Die Zylindermantelfläche und/oder die Kegelmantelfläche kann beispielsweise eine gedachte Fläche sein. Bevorzugt ist es jedoch, wenn das Werkzeug die Zylindermantelfläche und/oder die Kegelmantelfläche aufweist.

Zu einer einfachen und mithin kostengünstigen Konstruktion des Werkzeugs ist die Werkzeugverzahnung als Stirnverzahnung ausgebildet. Dann kann sich die Werkzeugverzahnung in einfacher Weise wenigstens im Wesentlichen in einer zu der Werkzeugdrehachse senkrecht angeordneten Ebene erstrecken. Zwingend erforderlich ist dies jedoch nicht.

Zusätzlich zu einer Ausgestaltung als Stirnverzahnung kann es sich anbieten, wenn sich die Projektionen der Werkzeugzähne auf eine senkrecht zu der Werkzeugdrehachse angeordnete Projektionsebene jeweils wenigstens im Wesentlichen radial zu der Werkzeugdrehachse erstrecken. Auch dies kann zu einer einfachen und kostengünstigen Konstruktion beitragen. Eine besonders einfache und kostengünstige Konstruktion wird ermöglicht, wenn sich die Werkzeugzähne jeweils wenigstens im Wesentlichen radial zur Werkzeugdrehachse erstrecken. Unabhängig davon ist mit einer Projektion auf die Projektionsebene insbesondere eine Projektion senkrecht auf die Projektionsebene gemeint.

Alternativ oder zusätzlich zu einer radialen Anordnung der Werkzeugzähne kann es konstruktiv einfach und zweckmäßig sein, wenn sich die Schneidkanten jeweils zwischen einer Zahnflanke eines der Werkzeugzähne und einer Stirnseite des entsprechenden Werkzeugzahns erstrecken. Dabei kann es besonders einfach und zweckmäßig sein, wenn die Schneidkanten jeweils durch die Zahnflanke und die Stirnseite des Werkzeugzahns gebildet sind. Dann können also die Schneidkanten jeweils sowohl die Zahnflanke als auch die Stirnseite des Werkzeugzahns abschnittsweise begrenzen. Unabhängig davon können die entsprechenden Stirnseiten der Werkzeugzähne jeweils radial außen bezogen auf die Werkzeugdrehachse angeordnet sein. So können die Schneidkanten in einfacher Weise mit den zu bearbeitenden Werkstückkanten in Eingriff gebracht werden. Beispielsweise aus Kostengründen können die Werkzeugzähne jeweils lediglich eine Schneidkante aufweisen. Bevorzugt ist es jedoch, wenn die Werkzeugzähne jeweils zwei Schneidkanten aufweisen, mit denen einander gegenüberliegende Werkstückkanten der Werkstückzähne entgratet und/oder angefast werden können. Dies ermöglicht eine einfache und schnelle Bearbeitung der einander gegenüberliegenden Werkstückkanten in einer Aufspannung. Dabei können mit einander gegenüberliegenden Werkstückkanten insbesondere Werkstückkanten gemeint sein, die einander gegenüberliegenden Zahnflanken und derselben Stirnseite eines der Werkstückzähne zugeordnet sind. Unabhängig davon können die Schneidkanten eines Werkzeugzahns einfach und zweckmäßig verschiedenen Zahnflanken des Werkzeugzahns zugeordnet, insbesondere durch verschiedene Zahnflanken des Werkzeugzahns gebildet, sein.

Die Werkzeugzähne können jeweils wenigstens im Bereich der wenigstens einen Schneidkante einen wenigstens im Wesentlichen achsensymmetrischen Querschnitt aufweisen. Dies ermöglicht eine einfache und mithin kostengünstige Fertigung der Werkzeugverzahnung. Wenn die Werkzeugzähne jeweils zwei Schneidkanten aufweisen, ermöglicht der achsensymmetrische Querschnitt zudem in kinematisch einfacher Weise eine gleichmäßige Bearbeitung der einander gegenüberliegenden Werkstückkanten beispielsweise von geradverzahnten Werkstücken. Dann können zweckmäßigerweise die zwei Schneidkanten jedes Werkzeugzahns wenigstens im Wesentlichen achsensymmetrisch zueinander ausgebildet sein. Unabhängig davon kann mit einem achsensymmetrischen Querschnitt insbesondere ein solcher gemeint sein, der zu einer zu der Werkzeugdrehachse wenigstens im Wesentlichen parallelen Symmetrieachse achsensymmetrisch ausgebildet ist.

Alternativ zu einem achsensymmetrischen Querschnitt können die Werkzeugzähne jeweils wenigstens im Bereich der wenigstens einen Schneidkante einen asymmetrischen Querschnitt aufweisen. Dies kann sich hinsichtlich einer kinematisch einfachen Bearbeitung beispielsweise von Schrägverzahnungen und/oder Werkstückverzahnungen mit schmalen Zahnlücken anbieten. Dabei kann unter einem asymmetrischen Querschnitt insbesondere ein solcher verstanden werden, der bezogen auf eine, insbesondere zu der Werkzeugdrehachse wenigstens im Wesentlichen parallele, Achse asymmetrisch ausgebildet ist. Unabhängig davon kann es bei zwei Schneidkanten je Werkzeugzahn zweckmäßig sein, wenn die Schneidkanten jedes Werkzeugzahns asymmetrisch zueinander ausgebildet sind. Alternativ oder zusätzlich kann es sich hinsichtlich einer kinematisch einfachen Bearbeitung besonders anbieten, wenn die einander gegenüberliegenden Zahnflanken der Werkzeugzähne jeweils wenigstens im Bereich der wenigstens einen Schneidkante des entsprechenden Werkzeugzahns unterschiedliche Zahnflankenbreiten aufweisen.

Das Werkzeug kann zwei Werkzeugverzahnungen aufweisen, die entlang der Werkzeugdrehachse voneinander beabstandet angeordnet sind. Dann können mit den Werkzeugverzahnungen Werkstückkanten, die verschiedenen Stirnseiten der Werkstückverzahnung zugeordnet sind, gleichzeitig entgratet und/oder angefast werden. Auf diese Weise können besonders kurze Bearbeitungszeiten erreicht werden. Dabei können die Werkzeugverzahnungen einfach und zweckmäßig einander zugewandt sein. Alternativ oder zusätzlich kann es sich auch anbieten, wenn die Werkzeugverzahnungen wenigstens im Wesentlichen gleichartig ausgebildet sind.

Um eine kollisionsfreie Bearbeitung der Werkstückkanten bis in den Zahnfußbereich der Werkstückzähne zu ermöglichen, kann es sich anbieten, wenn die Werkzeugzähne jeweils wenigstens in einem Querschnitt im Bereich der wenigstens einen Schneidkante am Zahnkopf des entsprechenden Werkzeugzahns spitz zulaufen. Dann sind also vorzugsweise die Zahnköpfe der Werkzeugzähne wenigstens im Bereich der Schneidkanten nicht abgeflacht oder abgerundet. Vielmehr können die Zahnköpfe der Werkzeugzähne jeweils wenigstens im Bereich der wenigstens einen Schneidkante wenigstens im Wesentlichen linienförmig ausgebildet sein. Unabhängig davon kann es sich hinsichtlich einer stabilen Ausgestaltung der Werkzeugzähne anbieten, wenn die Werkzeugzähne jeweils in einem Zahnspitzenwinkel von wenigstens 30° spitz zulaufen. Aus demselben Grund sind Werkzeugzähne besonders bevorzugt, die in einem Zahnspitzenwinkel von wenigstens 50°, vorzugsweise wenigstens 70°, spitz zulaufen. Alternativ oder zusätzlich kann es aus konstruktiven Gründen vorteilhaft sein, wenn die Werkzeugzähne jeweils in einem Zahnspitzenwinkel von höchstens 150° spitz zulaufen. Dabei wird eine besonders einfache Konstruktion mit Werkzeugzähnen ermöglicht, die in einem Zahnspitzenwinkel von höchstens 130°, vorzugsweise höchstens 110°, spitz zulaufen.

Um das Werkzeug in einfacher Weise in einer Werkzeugaufnahme, beispielsweise der Werkzeugmaschine, einspannen zu können, kann das Werkzeug einen Einspannabschnitt aufweisen. Dann kann die Werkzeugverzahnung dem Einspannabschnitt zugewandt sein. Dies kann sich hinsichtlich der Ableitung der auf die Werkzeugverzahnung bei der Werkstückbearbeitung wirkenden Kräfte und mithin einer vibrationsarmen Werkstückbearbeitung anbieten.

Grundsätzlich unabhängig von einem Einspannabschnitt kann das Werkzeug zweckmäßigerweise ein Trägerelement aufweisen, das die wenigstens eine Werkzeugverzahnung trägt. Dabei kann die Werkzeugverzahnung lösbar an dem Trägerelement gehalten sein. So kann die Werkzeugverzahnung beispielsweise bei Erreichen der Verschleißgrenze ausgetauscht werden. Unabhängig davon kann sich das Trägerelement zweckmäßigerweise entlang der Werkzeugdrehachse erstrecken. Alternativ oder zusätzlich kann das Trägerelement den Einspannabschnitt aufweisen.

Im Hinblick auf saubere Schnittkanten sowie einen geringen Energieeintrag in das Werkstück und mithin eine hohe Werkstückqualität kann es sich anbieten, wenn die Schneidkanten einen Kantenradius von höchstens 0,2 mm aufweisen. Vor demselben Hintergrund ist es besonders bevorzugt, wenn der Kantenradius der Schneidkanten höchstens 0,1 mm, vorzugsweise höchstens 0,05 mm, beträgt. Alternativ oder zusätzlich kann es im Hinblick auf den Aufwand zur Präparation der Schneidkanten und mithin die Herstellungskosten bevorzugt sein, wenn die Schneidkanten einen Kantenradius von wenigstens 0,01 mm, vorzugsweise wenigstens 0,02 mm, aufweisen. Dabei können sich die Werte für den Kantenradius zweckmäßig auf den Neuzustand des Werkzeugs beziehen.

Hinsichtlich einer langen Standzeit des Werkzeugs kann es vorteilhaft sein, wenn die Werkzeugverzahnung wenigstens im Bereich der Schneidkanten eine Härte von wenigstens 60 HRC aufweist. Aus demselben Grund kann es sich umso mehr anbieten, wenn die Härte wenigstens 63 HRC, vorzugsweise wenigstens 66 HRC, beträgt. Alternativ oder zusätzlich kann die Werkzeugverzahnung aus Kostengründen eine Härte von höchstens 68 HRC aufweisen. Dabei ist die Härte insbesondere gemäß der DIN EN ISO 6508-1:2016-12 gemessen.

Die Werkzeugverzahnung kann beispielsweise wenigstens im Wesentlichen aus einem pulvermetallurgisch hergestellten Schnellarbeitsstahl und/oder einem Hartmetallwerkstoff gebildet sein. Pulvermetallurgisch hergestellter Schnellarbeitsstahl wird in der Praxis häufig auch als "PM-HSS" oder "HSS-PM" bezeichnet. Entsprechende Werkstoffe eignen sich hinsichtlich ihrer Eigenschaften besonders für die Werkzeugverzahnung. Die zuvor genannten Härteangaben für die Werkzeugverzahnung bieten sich besonders an, wenn die Werkzeugverzahnung aus einem pulvermetallurgisch hergestellten Schnellarbeitsstahl gebildet ist. Grundsätzlich können die Härteangaben jedoch auch für andere Werkstoffe gelten.

Gemäß einer bevorzugten Ausgestaltung des Verfahrens ist das Werkstück als Zahnrad ausgebildet. Zahnräder können mit dem Werkzeug in besonders einfacher Weise entgratet werden. Das Zahnrad kann beispielsweise ein außenverzahntes Zahnrad sein. Dann kann die Werkstückverzahnung eine Außenverzahnung sein. Besonders bevorzugt kann es jedoch sein, wenn das Zahnrad ein innenverzahntes Zahnrad ist. Beim Entgraten und/oder Anfasen von innenverzahnten Zahnrädern werden aufgrund der Platzverhältnisse besondere Anforderungen an das Werkzeug gestellt, weshalb die Vorteile der Erfindung besonders zum Tragen kommen. Wenn das Werkstück ein innenverzahntes Zahnrad ist, kann die Werkstückverzahnung zweckmäßig eine Innenverzahnung sein.

Unabhängig von einer Ausbildung des Werkstücks als Zahnrad kann es sich hinsichtlich einer kinematisch einfachen Realisierung des Entgratens und/oder Anfasens anbieten, wenn das Werkstück um eine Werkstückdrehachse gedreht wird, während das Werkstück mit dem Werkzeug in Eingriff steht. Dann kann das Werkstück also während des Entgratens und/oder Anfasens der Werkstückkanten durch das Werkzeug um die Werkstückdrehachse gedreht werden. Unabhängig davon kann das Werkstück der Einfachheit halber von einem Werkstückdrehantrieb, beispielsweise der Werkzeugmaschine, um die Werkstückdrehachse drehend angetrieben werden. Alternativ oder zusätzlich kann es sich anbieten, wenn die Werkstückdrehachse wenigstens im Wesentlichen parallel zu der Werkzeugdrehachse angeordnet ist. Dies kann kinematisch einfach sein und sich mithin positiv auf den maschinellen Aufwand auswirken. Unabhängig von der Ausrichtung der Werkstückdrehachse kann es einfach und zweckmäßig sein, wenn das Werkstück und das Werkzeug in einem wenigstens im Wesentlichen konstanten Drehzahlverhältnis um die jeweilige Drehachse gedreht werden.

Im Hinblick auf eine effiziente Bearbeitung des Werkstücks und mithin eine kurze Bearbeitungszeit kann es sich anbieten, wenn aufeinanderfolgende Werkstückzähne der Werkstückverzahnung mit aufeinanderfolgenden Werkzeugzähnen der Werkzeugverzahnung entgratet und/oder angefast werden. Dann können also mit den Schneidkanten von nebeneinander angeordneten Werkzeugzähnen die Werkstückkanten nebeneinander angeordneter Werkstückzähne entgratet und/oder angefast werden.

Alternativ oder zusätzlichen kann es auch zu einer kurzen Bearbeitungszeit beitragen, wenn bei einer Umdrehung des Werkstücks um die Werkstückdrehachse mit der Werkzeugverzahnung wenigstens eine Werkstückkante jedes Werkstückzahns der Werkstückverzahnung wenigstens abschnittsweise entgratet und/oder angefast wird. Dann muss das Werkstück also vorzugsweise nicht mehrmals um die Werkstückdrehachse gedreht werden, um jeden Werkstückzahn zumindest teilweise zu bearbeiten. Unabhängig davon können besonders kurze Bearbeitungszeiten erreicht werden, wenn bei einer Umdrehung des Werkstücks nicht nur ein Abschnitt der Werkstückkanten, sondern die Werkstückkanten wenigstens im Wesentlichen entgratet und/oder angefast werden.

Hinsichtlich einer einfachen Kinematik und mithin eines geringen maschinellen Aufwands kann es bevorzugt sein, wenn die Schneidkanten jeweils in Richtung des Zahnfußes des jeweils zu bearbeitenden Werkstückzahns entlang der zu bearbeitenden Werkstückkante bewegt werden. Dann können also die Schneidkanten, während die Schneidkanten mit einer der Werkstückkanten in spanendem Kontakt stehen, in Richtung des Zahnfußes des die entsprechende Werkstückkante bildenden Werkstückzahns entlang der Werkstückkante bewegt werden.

Unabhängig davon, in welcher Richtung die Werkstückkanten bearbeitet werden, kann es grundsätzlich ausreichen, wenn bei einer Umdrehung des Werkzeugs um die Werkzeugdrehachse mit den Werkzeugzähnen jeweils nur ein Abschnitt der jeweils zu bearbeitenden Werkstückkante bearbeitet wird. Im Hinblick auf eine kurze Bearbeitungszeit ist es jedoch bevorzugt, wenn bei einer Umdrehung des Werkzeugs um die Werkzeugdrehachse mit den Werkzeugzähnen jeweils die zu bearbeitende Werkstückkante wenigstens im Wesentlichen vom Zahnkopf des zu bearbeitenden Werkstückzahns bis wenigstens im Wesentlichen zum Zahnfuß des entsprechenden Werkstückzahns entgratet und/oder angefast wird. Dabei können besonders kurze Bearbeitungszeiten erreicht werden, wenn die jeweils zu bearbeitende Werkstückkante wenigstens im Wesentlichen vom Kopfkreis bis wenigstens im Wesentlichen zum Fußkreis der Werkstückverzahnung entgratet und/oder angefast wird. Alternativ oder zusätzlich kann es in diesem Zusammenhang zweckmäßig sein, wenn die Schneidkanten, während die Schneidkanten mit einer der Werkstückkanten in spanendem Kontakt stehen, wenigstens im Wesentlichen vom Zahnkopf bis wenigstens im Wesentlichen zum Zahnfuß des die entsprechende Werkstückkante bildenden Werkstückzahns entlang der Werkstückkante bewegt werden.

Es kann zweckmäßig sein, einander gegenüberliegende Werkstückkanten der Werkstückzähne zu entgraten und/oder anzufasen. Dies kann beispielsweise mit verschiedenen Werkzeugverzahnungen, beispielsweise desselben Werkzeugs oder verschiedener Werkzeuge, erfolgen. Im Hinblick auf kurze Zykluszeiten ist es jedoch bevorzugt, wenn einander gegenüberliegende Werkstückkanten der Werkstückzähne mit derselben Werkzeugverzahnung entgratet und/oder angefast werden. Dann kann das Entgraten und/oder Anfasen der einander gegenüberliegenden Werkstückkanten nämlich einfach und schnell in einer Aufspannung und vorzugsweise wenigstens im Wesentlichen ohne erneute Zustellung des Werkzeugs erfolgen. Unabhängig davon kann es zweckmäßig sein, wenn die Werkzeugzähne der Werkzeugverzahnung jeweils zwei Schneidkanten zum Entgraten und/oder Anfasen der einander gegenüberliegenden Werkstückkanten aufweisen. Ganz grundsätzlich werden unter einander gegenüberliegenden Werkstückkanten der Werkstückzähne insbesondere Werkstückkanten verstanden, die einander gegenüberliegenden Zahnflanken eines Werkstückzahns und derselben Stirnseite des Werkstückzahns zugeordnet sind.

Unabhängig davon, ob einander gegenüberliegende Werkstückkanten mit derselben oder verschiedenen Werkzeugverzahnungen bearbeitet werden, kann es sich anbieten, wenn das Werkzeug beim Entgraten und/oder Anfasen von einander gegenüberliegenden Werkstückkanten der Werkstückzähne in entgegengesetzten Drehrichtungen um die Werkzeugdrehachse gedreht wird. Auch dies trägt zu einem kinematisch einfachen Entgraten und/oder Anfasen der gegenüberliegenden Werkstückkanten bei, was sich positiv auf den maschinellen Aufwand auswirken kann. Dann können beispielsweise zunächst erste Werkstückkanten der Werkstückzähne bearbeitet werden, wobei das Werkzeug in einer ersten Drehrichtung um die Werkzeugdrehachse gedreht wird. Sodann können zweite, den ersten Werkstückkanten gegenüberliegende Werkstückkanten der Werkstückzähne bearbeitet werden, wobei das Werkzeug in einer zweiten, der ersten Drehrichtung entgegengesetzten Drehrichtung um die Werkzeugdrehachse gedreht wird. Unabhängig von der Drehrichtung des Werkzeugs kann es sich der Einfachheit halber auch anbieten, wenn das Werkstück beim Entgraten und/oder Anfasen der einander gegenüberliegenden Werkstückkanten in entgegengesetzten Richtungen bewegt, insbesondere in entgegengesetzten Drehrichtungen um die Werkstückdrehachse gedreht, wird.

Hinsichtlich kurzer Bearbeitungszeiten kann es vorteilhaft sein, wenn Werkstückkanten, die verschiedenen Stirnseiten der Werkstückverzahnung zugeordnet sind, gleichzeitig entgratet und/oder angefast werden. Dies kann beispielsweise mit verschiedenen Werkzeugen erfolgen. Besonders einfach kann es jedoch sein, wenn die simultane Bearbeitung der den verschiedenen Stirnseiten der Werkstückverzahnung zugeordneten Werkstückkanten mit demselben Werkzeug, vorzugsweise mit verschiedenen, insbesondere entlang der Werkzeugdrehachse voneinander beabstandeten, Werkzeugverzahnungen desselben Werkzeugs, erfolgt.

Nachfolgend wird die Erfindung anhand einer lediglich ein Ausführungsbeispiel darstellenden Zeichnung näher erläutert. In der Zeichnung zeigen jeweils schematisch
- Fig. 1A-B: ein erfindungsgemäßes Werkzeug beim Entgraten und Anfasen einer Werkstückverzahnung eines Werkstücks in einer perspektivischen Ansicht und einer Seitenansicht,
- Fig. 2A-C: ein eine Werkzeugverzahnung bildendes Werkzeugelement des Werkzeugs aus Fig. 1 in einer perspektivischen Ansicht von oben, einer perspektivischen Ansicht von unten und einer Seitenansicht,
- Fig. 3A-B: ein Detail des Werkzeugs und des Werkstücks aus Fig. 1 bei entgegengesetzten Drehrichtungen des Werkzeugs und des Werkstücks jeweils in dem in der Fig. 1A dargestellten Bereich III in einer perspektivischen Ansicht.

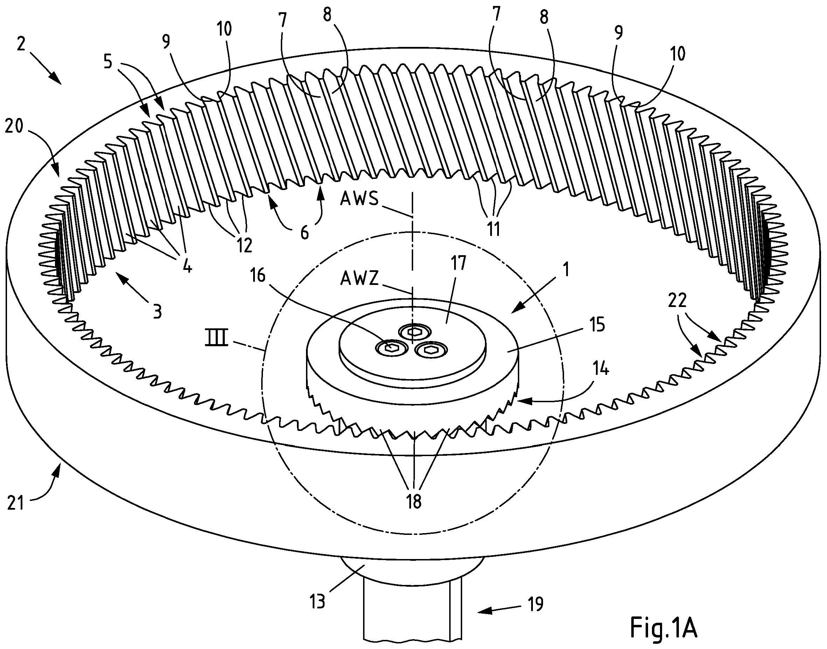

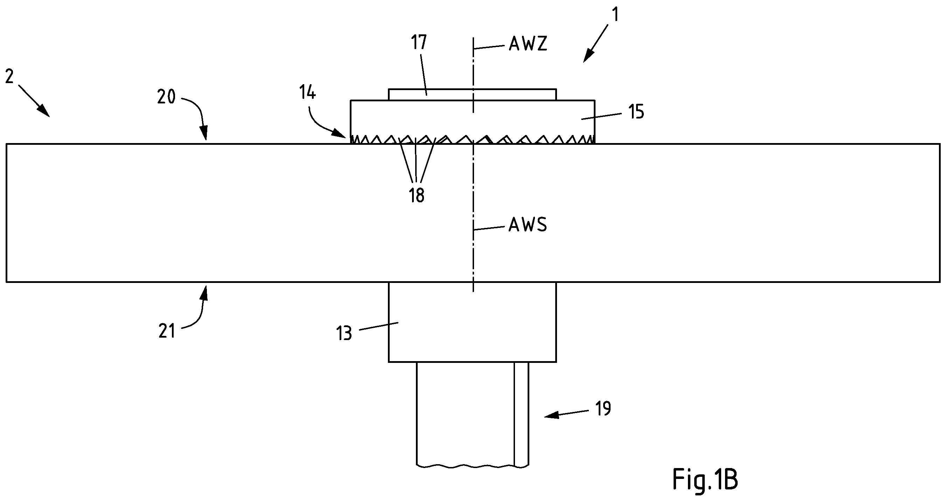

In den Fig. 1A-B sind ein Werkzeug 1 und ein Werkstück 2 in einer perspektivischen Ansicht und in einer Seitenansicht dargestellt. Das Werkstück 2 ist als innenverzahntes Zahnrad ausgebildet, das eine vorliegend schrägverzahnte Werkstückverzahnung 3 mit einer Vielzahl von Werkstückzähnen 4 aufweist. Die Werkstückzähne 4 weisen jeweils zwei Stirnseiten 5,6 sowie zwei einander gegenüberliegende, sich von einer Stirnseite 5 zur anderen Stirnseite 6 erstreckende Zahnflanken 7,8 auf. Dabei weisen die Werkstückzähne 4 an den Stirnseiten 5,6 jeweils zwei einander gegenüberliegende, vorliegend als Stirnkanten ausgebildete Werkstückkanten 9,10,11,12 auf, die sich jeweils zwischen einer der Stirnseiten 5,6 und einer der Zahnflanken 7,8 des entsprechenden Werkstückzahns 4 erstrecken.

Das Werkzeug 1 weist ein sich entlang einer Werkzeugdrehachse AWZ erstreckendes Trägerelement 13 und ein eine Werkzeugverzahnung 14 bildendes Werkzeugelement 15 auf. Das Trägerelement 13 trägt das Werkzeugelement 15. Dabei ist das Werkzeugelement 15 vorliegend mittels Schrauben 16 und einer Montagescheibe 17 lösbar an dem Trägerelement 13 montiert. Die Werkzeugverzahnung 14 weist eine Mehrzahl von Werkzeugzähnen 18 auf, die um die Werkzeugdrehachse AWZ verteilt angeordnet sind.

An dem dem Werkzeugelement 15 gegenüberliegenden Längsende weist das Trägerelement 13 einen Einspannabschnitt 19 auf, mit dem das Werkzeug 1 in einer nicht dargestellten Werkzeugaufnahme einer nicht dargestellten Werkzeugmaschine eingespannt ist. Über die Werkzeugaufnahme wird das Werkzeug 1 von einem nicht dargestellten Werkzeugdrehantrieb der Werkzeugmaschine um die Werkzeugdrehachse AWZ drehend angetrieben.

Das Werkstück 2 ist in einer nicht dargestellten Werkstückaufnahme der Werkzeugmaschine eingespannt. Über die Werkstückaufnahme wird das Werkstück 2 von einem nicht dargestellten Werkstückdrehantrieb der Werkzeugmaschine um eine zu der Werkzeugdrehachse AWZ wenigstens im Wesentlichen parallele und mittig des Werkstücks 2 angeordnete Werkstückdrehachse AWS drehend angetrieben.

Während das Werkzeug 1 und das Werkstück 2 mit einem wenigstens im Wesentlichen konstanten Drehzahlverhältnis um die jeweilige Drehachse AWZ,AWS gedreht werden, greift die Werkzeugverzahnung 14 wälzend in die Werkstückverzahnung 3 ein. Dabei greifen die Werkzeugzähne 18 über eine durch die obere der beiden Stirnseiten 20,21 der Werkstückverzahnung 3 definierte Ebene in Zahnlücken 22 zwischen den Werkstückzähnen 4 ein. Die in die Zahnlücken 22 der Werkstückverzahnung 3 eingreifenden Werkzeugzähne 18 tragen im Bereich der oberen Stirnseite 20 der Werkstückverzahnung 3 spanend Material von dem Werkstück 2 ab.

Das dargestellte und insoweit bevorzugte Werkzeug 1 weist der Einfachheit halber lediglich eine Werkzeugverzahnung 14 auf, mit der die Stirnseiten 20,21 der Werkstückverzahnung 3 bedarfsweise nacheinander bearbeitet werden können. Alternativ könnte vorgesehen sein, dass das Werkzeug 1 zwei entlang der Werkzeugdrehachse AWZ voneinander beabstandete, beispielsweise jeweils durch ein Werkzeugelement 15 gebildete, Werkzeugverzahnungen 14 aufweist. Dann könnten mit dem Werkzeug 1 die verschiedenen Stirnseiten 20,21 der Werkstückverzahnung 3 gleichzeitig bearbeitet werden.

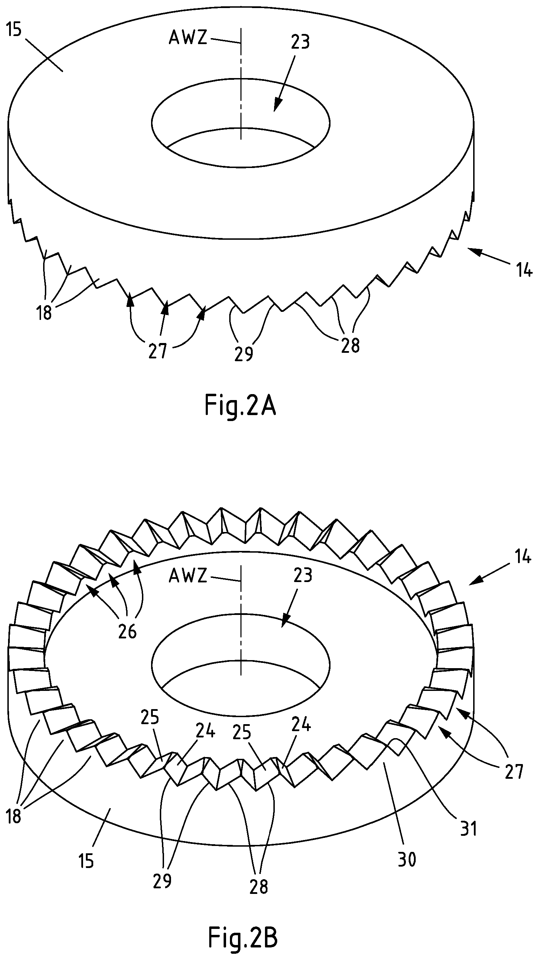

In den Fig. 2A-B ist das die Werkzeugverzahnung 14 bildende Werkzeugelement 15 in einer perspektivischen Ansicht von oben und in einer perspektivischen Ansicht von unten dargestellt. Das Werkzeugelement 15 weist eine Montageöffnung 23 auf, mit der das Werkzeugelement 15 auf das Trägerelement 13 des Werkzeugs 1 aufgeschoben und dort mittels der Montagescheibe 17 und den Schrauben 16 befestigt werden kann.

Die Werkzeugverzahnung 14 ist vorliegend als Stirnverzahnung ausgebildet, die sich wenigstens im Wesentlichen in einer Ebene senkrecht zu der Werkzeugdrehachse AWZ erstreckt. Dabei erstrecken sich die Werkzeugzähne 18 jeweils wenigstens im Wesentlichen radial zur Werkzeugdrehachse AWZ. Die Werkzeugzähne 18 weisen jeweils zwei gegenüberliegende Zahnflanken 24,25 sowie eine radial innen angeordnete Stirnseite 26 und eine radial außen angeordnete Stirnseite 27 auf.

Im dargestellten und insoweit bevorzugten Ausführungsbeispiel weisen die Werkzeugzähne 18 jeweils zwei gegenüberliegende Schneidkanten 28,29 auf, die vorliegend jeweils durch die radial außen angeordnete Stirnseite 27 und eine der Zahnflanken 24,25 des entsprechenden Werkzeugzahns 18 gebildet sind. Die Schneidkanten 28,29 weisen jeweils eine Erstreckung entlang der Werkzeugdrehachse AWZ und eine Erstreckung in Umfangsrichtung der Werkzeugdrehachse AWZ auf. Dabei erstrecken sich die Schneidkanten 28,29 vorliegend in einer gemeinsamen Zylindermantelfläche um die Werkzeugdrehachse AWZ. Beim dargestellten und insoweit bevorzugten Ausführungsbeispiel verjüngen sich die Werkzeugzähne 18 jeweils kontinuierlich vom Zahnfuß 30 in Richtung des Zahnkopfs 31 des entsprechenden Werkzeugzahns 18. Dabei laufen die Werkzeugzähne 18 jeweils im Bereich der Schneidkanten 28,29 am Zahnkopf 31 spitz zu.

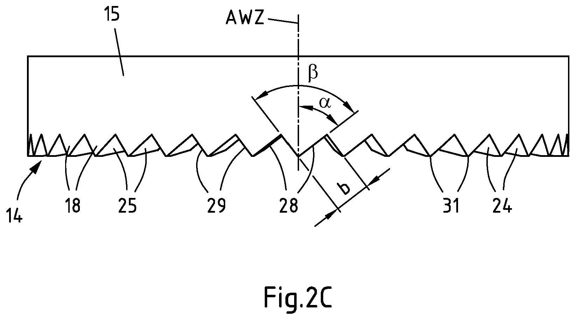

In der Fig. 2C ist das die Werkzeugverzahnung 14 bildende Werkzeugelement 15 in einer Seitenansicht dargestellt. Die Werkzeugzähne 18 weisen vorliegend jeweils bezogen auf eine zu der Werkzeugdrehachse AWZ parallele Achse einen asymmetrischen Querschnitt auf. Dabei weisen die Zahnflanken 25 der Werkzeugzähne 18 im Bereich der Schneidkanten 28,29 jeweils eine größere Zahnflankenbreite b auf als die gegenüberliegende Zahnflanke 24 des entsprechenden Werkzeugzahns 18. Die Schneidkanten 28 der Werkzeugzähne 18 sind bei der dargestellten und insoweit bevorzugten Werkzeugverzahnung 14 in einem Schneidkantenwinkel α von ca. 50° zu der Werkzeugdrehachse AWZ angeordnet. Die gegenüberliegenden Schneidkanten 29 der Werkzeugzähne 18 sind vorliegend in einem Schneidkantenwinkel von ca. 40° zu der Werkzeugdrehachse AWZ angeordnet. Dabei laufen die Werkzeugzähne 18 jeweils unter einem Zahnspitzenwinkel β von wenigstens im Wesentlichen 90° im Bereich der Schneidkanten 28,29 spitz zu.

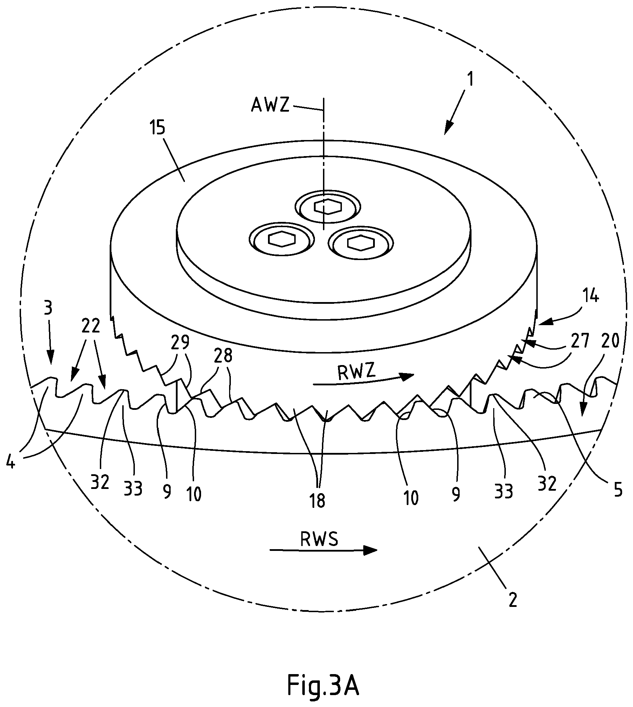

In der Fig. 3A ist ein Detail des Werkzeugs 1 und des Werkstücks 2 in dem in der Fig. 1A dargestellten Bereich III in einer perspektivischen Ansicht dargestellt. Während das Werkzeug 1 und das Werkstück 2 um die jeweilige Drehachse AWZ,AWS gedreht werden, werden mit den in Drehrichtung RWZ des Werkzeugs 1 vorlaufenden Schneidkanten 28 der Werkzeugzähne 18 die der oberen Stirnseite 20 der Werkstückverzahnung 3 zugeordneten und in Drehrichtung RWS des Werkstücks 2 nachlaufenden Werkstückkanten 10 der Werkstückzähne 4 entgratet und gleichzeitig angefast.

Die in Drehrichtung RWZ des Werkzeugs 1 vorlaufenden Schneidkanten 28 gelangen beim Hineinbewegen der Werkzeugzähne 18 in die zwischen den Werkstückzähnen 4 gebildeten Zahnlücken 22 mit den in Drehrichtung RWS des Werkstücks 2 nachlaufenden Werkstückkanten 10 in spanenden Kontakt. Während die Schneidkanten 28 mit den zu bearbeitenden Werkstückkanten 10 in spanendem Kontakt stehen, werden die Schneidkanten 28 jeweils vom Zahnkopf 32 bis zum Zahnfuß 33 des entsprechenden Werkstückzahns 4 bewegt, sodass wenigstens im Wesentlichen die gesamte Werkstückkante 10 entgratet und angefast wird.

Im Bereich der Zahnfüße 33 der Werkstückzähne 4 wird der Kontakt zwischen den Werkzeugzähnen 18 und dem Werkstück 2 aufgehoben. Beim Hinausbewegen der Werkzeugzähne 18 aus den Zahnlücken 22 besteht zwischen den in Drehrichtung RWZ des Werkzeugs 1 nachlaufenden Schneidkanten 29 der Werkzeugzähne 18 und den der oberen Stirnseite 20 der Werkstückverzahnung 3 zugeordneten und in Drehrichtung RWS des Werkstücks 2 vorlaufenden Werkstückkanten 9 der Werkstückzähne 4 kein Kontakt. Die in Drehrichtung RWS des Werkstücks 2 vorlaufenden Werkstückkanten 9 der Werkstückzähne 4 bleiben mithin zunächst unbearbeitet.

Beim dargestellten und insoweit bevorzugten Ausführungsbeispiel werden mit den Schneidkanten 28 aufeinanderfolgender Werkzeugzähne 18 die Werkstückkanten 10 aufeinanderfolgender Werkstückzähne 4 spanend bearbeitet. So werden vorliegend bei einer Umdrehung des Werkstücks 2 um die Werkstückdrehachse AWS die in Drehrichtung RWS des Werkstücks 2 nachlaufenden Werkstückkanten 10 aller Werkstückzähne 4 entgratet und angefast.

Nachdem die Werkstückkanten 10 der Werkstückzähne 4 mit den Schneidkanten 28 der Werkzeugzähne 18 entgratet und angefast worden sind, werden das Werkzeug 1 und das Werkstück 2 um einen kleinen Winkelbetrag von beispielsweise ca. 1° gegeneinander verdreht. So gelangen die den Schneidkanten 28 gegenüberliegenden Schneidkanten 29 der Werkzeugzähne 18 mit den noch unbearbeiteten Werkstückkanten 9 der Werkstückzähne 4 in Kontakt. Sodann werden das Werkzeug 1 und das Werkstück 2 in zu den dargestellten Drehrichtungen RWZ,RWS entgegengesetzten Drehrichtungen um die jeweilige Drehachse AWZ,AWS gedreht, um mit den Schneidkanten 29 die Werkstückkanten 9 zu entgraten und anzufasen.

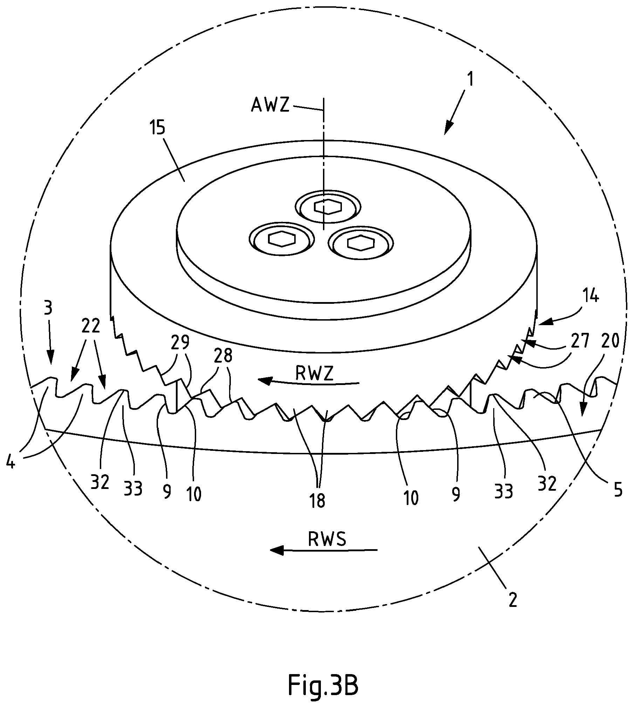

In der Fig. 3B ist das Detail des Werkzeugs 1 und des Werkstücks 2 gemäß Fig. 3A dargestellt, wobei das Werkzeug 1 und das Werkstück 2 gegenüber der Anordnung in Fig. 3A um einen kleinen Winkelbetrag von beispielsweise ca. 1° gegeneinander verdreht sind, sodass die Schneidkanten 29 der Werkzeugzähne 18 mit den Werkstückkanten 9 der Werkstückzähne 4 in spanenden Kontakt gelangen. Dabei werden das Werkzeug 1 und das Werkstück 2 im Vergleich zur Fig. 3A in entgegengesetzten Drehrichtungen RWZ,RWS um die jeweilige Drehachse AWZ,AWS gedreht. Beim Hineinbewegen der Werkzeugzähne 18 in die Zahnlücken 22 der Werkstückverzahnung 3 gelangen die in Drehrichtung RWZ des Werkzeugs 1 vorlaufenden Schneidkanten 29 der Werkzeugzähne 18 mit den in Drehrichtung RWS des Werkstücks 2 nachlaufenden Werkstückkanten 9 in spanenden Kontakt. Sodann werden die Schneidkanten 29 mit der jeweils zu bearbeitenden Werkstückkante 9 in spanendem Kontakt stehend vom Zahnkopf 32 bis zum Zahnfuß 33 des entsprechenden Werkstückzahns 4 entlang der Werkstückkante 9 bewegt und so die Werkstückkanten 9 entgratet und angefast. Beim Hinausbewegen der Werkzeugzähne 18 aus den Zahnlücken 22 der Werkstückverzahnung 3 besteht zwischen den in Drehrichtung RWZ des Werkzeugs 1 nachlaufenden Schneidkanten 28 der Werkzeugzähne 18 und den in Drehrichtung RWS des Werkstücks 2 vorlaufenden Werkstückkanten 10 der Werkstückzähne 4 kein Kontakt.

### Bezugszeichenliste

- 1: Werkzeug
- 2: Werkstück
- 3: Werkstückverzahnung
- 4: Werkstückzahn
- 5,6: Stirnseite eines Werkstückzahns
- 7,8: Zahnflanke eines Werkstückzahns
- 9,10,11,12: Werkstückkante
- 13: Trägerelement
- 14: Werkzeugverzahnung
- 15: Werkzeugelement
- 16: Schraube
- 17: Montagescheibe
- 18: Werkzeugzahn
- 19: Einspannabschnitt
- 20,21: Stirnseite der Werkstückverzahnung
- 22: Zahnlücke
- 23: Montageöffnung
- 24,25: Zahnflanke eines Werkzeugzahns
- 26,27: Stirnseite eines Werkzeugzahns
- 28,29: Schneidkante
- 30: Zahnfuß eines Werkzeugzahns
- 31: Zahnkopf eines Werkzeugzahns
- 32: Zahnkopf eines Werkstückzahns
- 33: Zahnfuß eines Werkstückzahns

- AWS: Werkstückdrehachse
- AWZ: Werkzeugdrehachse
- RWS: Drehrichtung des Werkstücks
- RWZ: Drehrichtung des Werkzeugs
- b: Zahnflankenbreite
- α: Schneidkantenwinkel
- β: Zahnspitzenwinkel

## Patentansprüche

1. Werkzeug (1) zum spanenden Entgraten und/oder Anfasen einer eine Mehrzahl von Werkstückzähnen (4) umfassenden Werkstückverzahnung (3) mit einer Mehrzahl von um eine Werkzeugdrehachse (AWZ) des Werkzeugs (1) verteilt angeordneten und jeweils eine Erstreckung entlang der Werkzeugdrehachse (AWZ) aufweisenden Schneidkanten (28,29) zum spanenden Entgraten und/oder Anfasen von sich jeweils zwischen einer Zahnflanke (7,8) und einer Stirnseite (5,6) eines Werkstückzahns (4) erstreckenden Werkstückkanten (9,10,11,12), insbesondere Stirnkanten (9,10,11,12), der Werkstückverzahnung (3), wobei die Schneidkanten (28,29) durch Werkzeugzähne (18) wenigstens einer Werkzeugverzahnung (14) des Werkzeugs (1) gebildet sind
**dadurch gekennzeichnet, dass**
die Schneidkanten (28,29) wenigstens im Wesentlichen auf einer Zylindermantelfläche und/oder Kegelmantelfläche um die Werkzeugdrehachse (AWZ) angeordnet sind und dass die Werkzeugverzahnung (14) als Stirnverzahnung (14) ausgebildet ist.

2. Werkzeug nach Anspruch 1,
**dadurch gekennzeichnet, dass**
die Werkzeugverzahnung (14) wenigstens fünf, bedarfsweise wenigstens zehn, vorzugsweise wenigstens fünfzehn, insbesondere wenigstens zwanzig, jeweils wenigstens eine Schneidkante (28,29) bildende Werkzeugzähne (18) aufweist und/oder dass die Schneidkanten (28,29) jeweils eine Erstreckung in Umfangsrichtung bezogen auf die Werkzeugdrehachse (AWZ) aufweisen .

3. Werkzeug nach Anspruch 1 oder 2,
**dadurch gekennzeichnet, dass**
sich die Projektionen der Werkzeugzähne (18) auf eine senkrecht zu der Werkzeugdrehachse (AWZ) angeordnete Projektionsebene jeweils wenigstens im Wesentlichen radial zur Werkzeugdrehachse (AWZ) erstrecken.

4. Werkzeug nach einem der Ansprüche 1 bis 3,
**dadurch gekennzeichnet, dass**
sich die Schneidkanten (28,29) jeweils zwischen einer Zahnflanke (24,25) und einer, insbesondere radial außen bezogen auf die Werkzeugdrehachse (AWZ) angeordneten, Stirnseite (26,27) eines Werkzeugzahns (18) erstrecken.

5. Werkzeug nach einem der Ansprüche 1 bis 4,
**dadurch gekennzeichnet, dass**
die Werkzeugzähne (18) jeweils zwei, insbesondere verschiedenen Zahnflanken (24,25) des Werkzeugzahns (18) zugeordnete, Schneidkanten (28,29) zum Entgraten und/oder Anfasen einander gegenüberliegender Werkstückkanten (9,10,11,12) der Werkstückzähne (4) aufweisen.

6. Werkzeug nach einem der Ansprüche 1 bis 5,
**dadurch gekennzeichnet, dass**
die Werkzeugzähne (18) jeweils wenigstens im Bereich der wenigstens einen Schneidkante (28,29) einen wenigstens im Wesentlichen achsensymmetrischen oder asymmetrischen Querschnitt aufweisen.

7. Werkzeug nach einem der Ansprüche 1 bis 6,
**dadurch gekennzeichnet, dass**
das Werkzeug (1) zwei entlang der Werkzeugdrehachse (AWZ) voneinander beabstandete, insbesondere einander zugewandte, Werkzeugverzahnungen (14) zum gleichzeitigen Entgraten und/oder Anfasen von verschiedenen Stirnseiten (20,21) der Werkstückverzahnung (3) zugeordneten Werkstückkanten (9,10,11,12) aufweist.

8. Werkzeug nach einem der Ansprüche 1 bis 7,
**dadurch gekennzeichnet, dass**
die Werkzeugzähne (18) jeweils wenigstens in einem Querschnitt im Bereich der wenigstens einen Schneidkante (28,29) am Zahnkopf (31) des Werkzeugzahns (18) spitz zulaufen.

9. Werkzeug nach einem der Ansprüche 1 bis 8,
**dadurch gekennzeichnet, dass**
die Werkzeugverzahnung (14) einem Einspannabschnitt (19) des Werkzeugs (1) zum Einspannen des Werkzeugs (1) in einer Werkzeugaufnahme zugewandt ist und/oder dass ein die wenigstens eine Werkzeugverzahnung (14) tragendes, insbesondere sich entlang der Werkzeugdrehachse (AWZ) erstreckendes und/oder den Einspannabschnitt (19) aufweisendes, Trägerelement (13) vorgesehen ist.

10. Werkzeug nach einem der Ansprüche 1 bis 9,
**dadurch gekennzeichnet, dass**
die Schneidkanten (28,29) einen Kantenradius von wenigstens 0,01 mm, vorzugsweise wenigstens 0,02 mm, und/oder höchstens 0,2 mm, vorzugsweise höchstens 0,1 mm, insbesondere höchstens 0,05 mm, aufweisen und/oder dass die Werkzeugverzahnung (14) wenigstens im Bereich der Schneidkanten (28,29) eine Härte von wenigstens 60 HRC, vorzugsweise wenigstens 63 HRC, insbesondere wenigstens 66 HRC, aufweist.

11. Verfahren zum spanenden Entgraten und/oder Anfasen einer eine Mehrzahl von Werkstückzähnen (4) umfassenden Werkstückverzahnung (3) eines Werkstücks (2) mit wenigstens einem Werkzeug (1) nach einem der Ansprüche 1 bis 10,
- bei dem das Werkzeug (1) unter Eingriff der Werkzeugverzahnung (14) in die Werkstückverzahnung (3) um die Werkzeugdrehachse (AWZ) gedreht wird und
- bei dem mit den Schneidkanten (28,29) der in die Werkstückverzahnung (3) eingreifenden Werkzeugverzahnung (14) die sich jeweils zwischen einer Zahnflanke (7,8) und einer Stirnseite (5,6) eines Werkstückzahns (4) erstreckenden Werkstückkanten (9,10,11,12), insbesondere Stirnkanten (9,10,11,12), der Werkstückverzahnung (3) wenigstens abschnittsweise spanend entgratet und/oder angefast werden.

12. Verfahren nach Anspruch 11,
- bei dem das Werkstück (2) ein, insbesondere innenverzahntes, Zahnrad (2) ist und/oder
- bei dem das mit dem Werkzeug (1) in Eingriff stehende Werkstück (2) um eine, insbesondere zu der Werkzeugdrehachse (AWZ) wenigstens im Wesentlichen parallele, Werkstückdrehachse (AWS) gedreht wird.

13. Verfahren nach Anspruch 11 oder 12,
- bei dem aufeinanderfolgende Werkstückzähne (4) der Werkstückverzahnung (3) mit aufeinanderfolgenden Werkzeugzähnen (18) der Werkzeugverzahnung (14) entgratet und/oder angefast werden und/oder
- bei dem bei einer Umdrehung des Werkstücks (2) um die Werkstückdrehachse (AWS) mit der Werkzeugverzahnung (14) wenigstens eine Werkstückkante (9,10,11,12) jedes Werkstückzahns (4) wenigstens abschnittsweise, insbesondere wenigstens im Wesentlichen, entgratet und/oder angefast wird.

14. Verfahren nach einem der Ansprüche 11 bis 13,
- bei dem die Schneidkanten (28,29) jeweils in Richtung des Zahnfußes (33) des jeweils zu bearbeitenden Werkstückzahns (4) entlang der zu bearbeitenden Werkstückkante (9,10,11,12) bewegt werden und/oder
- bei dem bei einer Umdrehung des Werkzeugs (1) um die Werkzeugdrehachse (AWZ) mit den Werkzeugzähnen (18) jeweils die zu bearbeitende Werkstückkante (9,10,11,12) wenigstens im Wesentlichen vom Zahnkopf (32) bis wenigstens im Wesentlichen zum Zahnfuß (33) des zu bearbeitenden Werkstückzahns (4) entgratet und/oder angefast wird.

15. Verfahren nach einem der Ansprüche 11 bis 14,
- bei dem einander gegenüberliegende Werkstückkanten (9,10,11,12) der Werkstückzähne (4) mit derselben Werkzeugverzahnung (14) entgratet und/oder angefast werden und/oder
- bei dem das Werkzeug (1) beim Entgraten und/oder Anfasen von einander gegenüberliegenden Werkstückkanten (9,10,11,12) der Werkstückzähne (4) in entgegengesetzten Drehrichtungen (RWZ) um die Werkzeugdrehachse (AWZ) gedreht wird und/oder
- bei dem, insbesondere mit demselben Werkzeug (1), verschiedenen Stirnseiten (20,21) der Werkstückverzahnung (3) zugeordnete Werkstückkanten (9,10,11,12) gleichzeitig entgratet und/oder angefast werden.

## Claims

1. Tool (1) for chip-removing deburring and/or chamfering of a workpiece toothing (3) comprising a plurality of workpiece teeth (4), with a plurality of cutting edges (28,29) distributed around a tool rotation axis(AWZ) of the tool (1) and each extending along the tool rotation axis(AWZ) (28, 29) for the chip-removing deburring and/or chamfering of workpiece edges (9, 10, 11, 12), in particular end edges (9, 10, 11, 12), of the workpiece toothing (3), each extending between a tooth flank (7, 8) and an end face (5, 6) of a workpiece tooth (4), wherein the cutting edges (28, 29) are formed by tool teeth (18) of at least one tool toothing (14) of the tool (1)
**characterized in that**
the cutting edges (28, 29) are arranged at least substantially on a cylindrical shell surface and/or conical shell surface around the tool rotation axis (AWZ) and that the tool toothing (14) is designed as face toothing (14).

2. Tool according to claim 1,
**characterized in that**
the tool toothing (14) has at least five, if necessary at least ten, preferably at least fifteen, in particular at least twenty, tool teeth (18) each forming at least one cutting edge (28, 29) and/or **in that** the cutting edges (28, 29) each have an extension in the circumferential direction in relation to the tool rotation axis(AWZ).

3. Tool according to claim 1 or 2,
**characterized in that**
the projections of the tool teeth (18) onto a projection plane arranged perpendicular to the tool rotation axis (AWZ) extend in each case at least substantially radially to the tool rotation axis (AWZ)

4. Tool according to one of claims 1 to 3,
**characterized in that**
the cutting edges (28, 29) extend in each case between a tooth flank (24, 25) and an end face (26, 27) of a tool tooth (18), which end face is in particular arranged radially outwards with respect to the tool rotation axis (AWZ).

5. Tool according to one of claims 1 to 4,
**characterized in that**
the tool teeth (18) each have two cutting edges (28, 29), in particular assigned to different tooth flanks (24, 25) of the tool tooth (18), for deburring and/or chamfering opposing workpiece edges (9, 10, 11, 12) of the workpiece teeth (4).

6. Tool according to one of claims 1 to 5,
**characterized in that**
the tool teeth (18) each have an at least substantially axisymmetrical or asymmetrical cross-section at least in the region of the at least one cutting edge (28, 29).

7. Tool according to one of claims 1 to 6,
**characterized in that**
the tool (1) has two tool toothings (14) spaced apart along the tool rotation axis (AWZ), in particular facing one another, for simultaneous deburring and/or chamfering of workpiece edges (9, 10, 11, 12) assigned to different end faces (20, 21) of the workpiece toothing (3).

8. Tool according to one of claims 1 to 7,
**characterized in that**
the tool teeth (18) each taper to a point in at least one cross-section in the region of the at least one cutting edge (28, 29) on the tooth head (31) of the tool tooth (18).

9. Tool according to one of claims 1 to 8,
**characterized in that**
the tool toothing (14) faces a clamping section (19) of the tool (1) for clamping the tool (1) in a tool holder and/or **in that** a carrier element (13) carrying the at least one tool toothing (14), in particular extending along the tool rotation axis(AWZ) and/or having the clamping section (19), is provided.

10. Tool according to one of claims 1 to 9,
**characterized in that**
the cutting edges (28, 29) have an edge radius of at least 0.01 mm, preferably at least 0.02 mm, and/or at most 0.2 mm, preferably at most 0.1 mm, in particular at most 0.05 mm, and/or **in that** the tool toothing (14) has a hardness of at least 60 HRC, preferably at least 63 HRC, in particular at least 66 HRC, at least in the region of the cutting edges (28, 29).

11. Method for chip-removing deburring and/or chamfering a workpiece toothing (3) comprising a plurality of workpiece teeth (4) of a workpiece (2) with at least one tool (1) according to one of claims 1 to 10,
- in which the tool (1) is rotated about the tool rotation axis (AWZ) with engagement of the tool toothing (14) in the workpiece toothing (3), and
- in which the workpiece edges (9, 10, 11, 12), in particular end edges (9, 10, 11, 12), of the workpiece toothing (3) extending in each case between a tooth flank (7, 8) and an end face (5, 6) of a workpiece tooth (4) are chip-removing deburred and/or chamfered by cutting at least in sections using the cutting edges (28, 29) of the tool toothing (14) engaging in the workpiece toothing (3).

12. Method according to claim 11,
- in which the workpiece (2) is a gear wheel (2), in particular with internal teeth, and/or
- in which the workpiece (2) in engagement with the tool (1) is rotated about a, workpiece rotation axis (AWS), which in particular is at least substantially parallel to the tool rotation axis (AWZ).

13. Method according to claim 11 or 12,
- in which successive workpiece teeth (4) of the workpiece toothing (3) are deburred and/or chamfered with successive tool teeth (18) of the tool toothing (14) and/or
- in which at least one workpiece edge (9, 10, 11, 12) of each workpiece tooth (4) is deburred and/or chamfered at least in sections, in particular at least substantially, with the tool toothing (14) during a rotation of the workpiece (2) about the workpiece rotation axis (AWS).

14. Method according to one of claims 11 to 13,
- in which the cutting edges (28, 29) are each moved in the direction of the tooth base (33) of the respective workpiece tooth (4) to be machined along the workpiece edge (9, 10, 11, 12) to be machined and/or
- in which, during a rotation of the tool (1) about the tool rotation axis (AWZ), with the tool teeth (18) respectively the workpiece edge (9, 10, 11, 12) to be machined is deburred and/or chamfered at least substantially from the tooth head (32) to at least substantially the tooth base (33) of the workpiece tooth (4) to be machined.

15. Method according to one of claims 11 to 14,
- in which opposing workpiece edges (9, 10, 11, 12) of the workpiece teeth (4) are deburred and/or chamfered with the same tool toothing (14) and/or
- in which the tool (1) is rotated about the tool rotation axis (AWZ) in opposite directions of rotation (RWZ) during deburring and/or chamfering of opposing workpiece edges (9, 10, 11, 12) of the workpiece teeth (4) and/or
- in which workpiece edges (9, 10, 11, 12) assigned to different end faces (20, 21) of the workpiece toothing (3) are simultaneously deburred and/or chamfered, in particular with the same tool (1).

## Revendications

1. Outil (1) d'ébavurage et/ou de chanfreinage par enlèvement de copeaux d'une denture de pièce (3) comprenant une pluralité de dents de pièce (4) avec une pluralité d'arêtes de coupe (28, 29) réparties autour d'un axe de rotation d'outil (AWZ) de l'outil (1) et présentant respectivement une extension le long de l'axe de rotation d'outil (AWZ) pour l'ébavurage et/ou le chanfreinage par enlèvement de copeaux d'arêtes de pièce (9, 10, 11, 12), notamment arêtes frontales (9, 10, 11, 12), de la denture de pièce (3) s'étendant respectivement entre un flanc de dent (7, 8) et une face frontale (5, 6) d'une dent de pièce (4), dans lequel les arêtes de coupe (28, 29) sont formées par des dents d'outil (18) d'au moins une denture d'outil (14) de l'outil (1),
**caractérisé en ce que**
les arêtes de coupe (28, 29) sont agencées au moins sensiblement sur une surface d'enveloppe cylindrique et/ou surface d'enveloppe conique autour de l'axe de rotation d'outil (AWZ) et que la denture d'outil (14) est réalisée en tant que denture frontale (14).

2. Outil selon la revendication 1,
**caractérisé en ce que**
la denture d'outil (14) présente au moins cinq, si nécessaire au moins dix, de préférence au moins quinze, notamment au moins vingt dents d'outil (18) formant chacune au moins une arête de coupe (28, 29) et/ou que les arêtes de coupe (28, 29) présentent chacune une extension dans la direction périphérique par rapport à l'axe de rotation d'outil (AWZ).

3. Outil selon la revendication 1 ou 2,
**caractérisé en ce que**
les projections des dents d'outil (18) s'étendent sur un plan de projection agencé perpendiculairement à l'axe de rotation d'outil (AWZ), respectivement au moins sensiblement radialement par rapport à l'axe de rotation d'outil (AWZ).

4. Outil selon l'une quelconque des revendications 1 à 3,
**caractérisé en ce que**
les arêtes de coupe (28, 29) s'étendent respectivement entre un flanc de dent (24, 25) et une face frontale (26, 27) d'une dent d'outil (18) agencée notamment radialement vers l'extérieur par rapport à l'axe de rotation d'outil (AWZ).

5. Outil selon l'une quelconque des revendications 1 à 4,
**caractérisé en ce que**
les dents d'outil (18) présentent respectivement deux arêtes de coupe (28, 29) associées notamment à différents flancs de dent (24, 25) de la dent d'outil (18) pour l'ébavurage et/ou le chanfreinage d'arêtes de pièce (9, 10, 11, 12) opposées les unes aux autres des dents de pièce (4).

6. Outil selon l'une quelconque des revendications 1 à 5,
**caractérisé en ce que**
les dents d'outil (18) présentent respectivement au moins dans la zone de l'au moins une arête de coupe (28, 29) une section transversale au moins sensiblement à symétrie axiale ou asymétrique.

7. Outil selon l'une quelconque des revendications 1 à 6,
**caractérisé en ce que**
l'outil (1) présente deux dentures d'outil (14) espacées l'une de l'autre le long de l'axe de rotation d'outil (AWZ), notamment orientées l'une vers l'autre, pour l'ébavurage et/ou le chanfreinage simultané d'arêtes de pièce (9, 10, 11, 12) associées à différentes faces frontales (20, 21) de la denture de pièce (3).

8. Outil selon l'une quelconque des revendications 1 à 7,
**caractérisé en ce que**
les dents d'outil (18) se terminent en pointe respectivement au moins dans une section transversale dans la zone de l'au moins une arête de coupe (28, 29) sur la tête de dent (31) de la dent d'outil (18).

9. Outil selon l'une quelconque des revendications 1 à 8,
**caractérisé en ce que**
la denture d'outil (14) est orientée vers une section de serrage (19) de l'outil (1) pour le serrage de l'outil (1) dans un logement d'outil et/ou qu'un élément porteur (13) portant l'au moins une denture d'outil (14), s'étendant notamment le long de l'axe de rotation d'outil (AWZ) et/ou présentant la section de serrage (19), est prévu.

10. Outil selon l'une quelconque des revendications 1 à 9,
**caractérisé en ce que**
les arêtes de coupe (28, 29) présentent un rayon d'arête d'au moins 0,01 mm, de préférence d'au moins 0,02 mm, et/ou tout au plus de 0,2 mm, de préférence de 0,1 mm au maximum, notamment de 0,05 mm au maximum, et/ou que la denture d'outil (14) présente une dureté d'au moins 60 HRC, de préférence d'au moins 63 HRC, notamment d'au moins 66 HRC, au moins dans la zone des arêtes de coupe (28, 29).

11. Procédé d'ébavurage et/ou de chanfreinage par enlèvement de copeaux d'une denture de pièce (3) d'une pièce (2) comportant une pluralité de dents de pièce (4) avec au moins un outil (1) selon l'une quelconque des revendications 1 à 10,
- selon lequel l'outil (1) est entraîné en rotation autour de l'axe de rotation d'outil (AWZ) dans la denture de pièce (3) sous l'effet de la denture d'outil (14) et
- selon lequel, avec les arêtes de coupe (28, 29) de la denture d'outil (14) s'insérant dans la denture de pièce (3), les arêtes de pièce (9, 10, 11, 12), notamment arêtes frontales (9, 10, 11, 12), de la denture de pièce (3) s'étendant respectivement entre un flanc de dent (7, 8) et une face frontale (5, 6) d'une dent de pièce (4), sont ébavurées et/ou chanfreinées par enlèvement de copeaux au moins sur certaines sections.

12. Procédé selon la revendication 11,
- selon lequel la pièce (2) est une roue dentée (2), notamment à denture intérieure et/ou
- selon lequel la pièce (2) en prise avec l'outil (1) est amenée en rotation autour d'un axe de rotation de pièce (AWS), notamment au moins sensiblement parallèle à l'axe de rotation d'outil (AWZ).

13. Procédé selon la revendication 11 ou 12,
- selon lequel des dents de pièce (4) successives de la denture de pièce (3) sont ébavurées et/ou chanfreinées avec des dents d'outil (18) successives de la denture d'outil (14) et/ou
- selon lequel, lors d'une rotation de la pièce (2) autour de l'axe de rotation de pièce (AWS), au moins une arête de pièce (9, 10, 11, 12) de chaque dent de pièce (4) est ébavurée et/ou chanfreinée au moins sur certaines sections, notamment au moins sensiblement, avec la denture d'outil (14).

14. Procédé selon l'une quelconque des revendications 11 à 13,
- selon lequel les arêtes de coupe (28, 29) sont respectivement déplacées en direction du pied de dent (33) de la dent de pièce (4) à usiner respectivement le long de l'arête de pièce (9, 10, 11, 12) à usiner et/ou
- selon lequel, lors d'une rotation de l'outil (1) autour de l'axe de rotation d'outil (AWZ), l'arête de pièce (9, 10, 11, 12) à usiner est respectivement ébavurée et/ou chanfreinée avec les dents d'outil (18), au moins sensiblement de la tête de dent (32) jusqu'au moins sensiblement le pied de dent (33) de la dent de pièce (4) à usiner.

15. Procédé selon l'une quelconque des revendications 11 à 14,
- selon lequel les arêtes de pièce (9, 10, 11, 12) opposées les unes aux autres des dents de pièce (4) sont ébavurées et/ou chanfreinées avec la même denture d'outil (14) et/ou
- selon lequel l'outil (1) est amené en rotation dans des sens de rotation (RWZ) opposés autour de l'axe de rotation d'outil (AWZ) lors de l'ébavurage et/ou du chanfreinage d'arêtes de pièce (9, 10, 11, 12) opposées les unes aux autres des dents de pièce (4) et/ou
- selon lequel des arêtes de pièce (9, 10, 11, 12) associées à différentes faces frontales (20, 21) de la denture de pièce (3) sont ébavurées et/ou chanfreinées simultanément, notamment avec le même outil (1).
